# FASCICULE DE BREVET EUROPEEN

(11) **EP 3 381 753 B1**
(45) Date de publication et mention de la délivrance du brevet: **04.12.2019**
(21) Numéro de dépôt: 18163972.5
(22) Date de dépôt: 26.03.2018
(51) Int. Cl.: B60R 22/20, B60N 2/30, B60R 22/18

(54) **BRIN-BOUCLE BASCULANT**
SCHWENKBARE GURTSCHNALLE
TILTING BUCKLE

(30) Priorité: 29.03.2017 FR 1752609
(43) Date de publication de la demande: 03.10.2018
(73) Titulaire: RENAULT s.a.s., 92100 Boulogne-Billancourt (FR)
(72) Inventeur: MESLIN, Guy, 78120 Rambouillet (FR)

(56) Documents cités:
- DE-A1- 10 307 859
- DE-A1-102007 019 711
- FR-A1- 2 932 733
- JP-A- 2007 118 776

## Description

### DOMAINE TECHNIQUE AUQUEL SE RAPPORTE L'INVENTION

La présente invention concerne de manière générale la sécurité des occupants d'un véhicule automobile.

Elle concerne plus particulièrement un dispositif d'accrochage de boucle de ceinture de sécurité (également appelé « brin-boucle »), à monter sur un siège qui comporte un support, une assise monté sur le support, et un dossier monté basculant sur le support.

L'invention concerne plus particulièrement un brin-boucle comportant :
- une partie d'assujettissement d'une boucle de ceinture de sécurité (communément appelée « tulipe »), et
- des moyens de montage de cette partie d'assujettissement sur un axe du siège, qui comprennent notamment :
   - une tige fixée d'un côté à ladite partie d'assujettissement et de l'autre à une rondelle, et
   - un moyen d'entraînement adapté à faire pivoter le brin-boucle par rapport au support du siège à la faveur du basculement du dossier par rapport à ce support.

L'invention trouve une application particulièrement avantageuse dans les sièges « Parere », c'est-à-dire dans les sièges dont les assises sont adaptées à basculer vers l'avant et dont les dossiers sont adaptés à basculer vers l'avant, en lieu et place de l'assise.

L'invention concerne également un siège équipé d'un tel brin-boucle, et un véhicule automobile équipé d'un tel siège.

### ARRIERE-PLAN TECHNOLOGIQUE

Les véhicules automobiles comportent généralement au moins deux sièges équipés chacun d'une ceinture de sécurité et d'un brin-boucle permettant de verrouiller la boucle de la ceinture de sécurité.

Le brin-boucle est généralement fixé au châssis du véhicule ou à la structure du siège, de façon à pouvoir résister à de gros efforts, notamment en cas d'accident.

Pour offrir une grande modularité aux véhicules, il est connu de pouvoir replier certains des sièges de façon à libérer de l'espace de chargement.

Lorsque le siège est en position d'utilisation, le brin-boucle doit être facilement accessible à l'usager, de façon à ce que ce dernier puisse aisément y verrouiller la boucle de sa ceinture de sécurité. Le risque est alors que lorsque le siège est en position repliée, le brin-boucle dépasse du siège et forme un obstacle au chargement du véhicule.

Il est alors connu du document FR2932733 de monter le brin-boucle de telle sorte qu'il pivote à la faveur du basculement du dossier, de façon à ne pas gêner le chargement du véhicule. La solution divulguée dans ce document consiste alors à tendre un « sandow » entre le brin-boucle et la charnière du dossier, de façon à ce que le brin-boucle puisse s'effacer sous l'action de son propre poids lorsque le dossier est basculé vers l'avant et qu'il puisse être tiré par le « sandow » dans une position accessible à l'usager lorsque le dossier est ramené en position d'utilisation.

L'utilisation d'un sandow s'avère toutefois peu pérenne et peu pratique, notamment lorsqu'il s'agit d'assembler le véhicule. Cette solution présente en outre un encombrement qui s'avère incompatible avec les sièges du type Parère. Le document DE 10 2007 019 711 A1 décrit un dispositif d'accrochage de boucle de ceinture de sécurité conforme au préambule de la revendication 1.

### OBJET DE L'INVENTION

Afin de remédier aux inconvénients précités de l'état de la technique, la présente invention propose un nouveau type de brin-boucle susceptible de basculer à la faveur du repliement du siège.

Plus particulièrement, on propose selon l'invention un dispositif d'accrochage (ou « brin-boucle ») tel que défini dans l'introduction, dans lequel il est prévu de coupler le moyen d'entraînement à un axe du siège qui est adapté à pivoter à la faveur du basculement du dossier, de manière que le moyen d'entraînement fasse plus précisément pivoter le brin-boucle à la faveur du pivotement de cet axe. Pour cela, le moyen d'entraînement défini en introduction comporte une douille sur laquelle est engagée ladite rondelle, et qui est adaptée à être engagée sur ledit axe de fixation et à être couplée audit axe de fixation de façon à faire pivoter la partie d'assujettissement à la faveur du pivotement dudit axe de fixation.

Ainsi, grâce à l'invention, l'entraînement du brin-boucle en position effacée sous le siège lorsque le dossier est replié, ou en position accessible au-dessus de l'assise lorsque le dossier est déplié, est réalisé au moyen d'un système particulièrement simple et présentant un encombrement mineur puisqu'il est situé sur l'axe de fixation du brin-boucle au siège.

On comprend en outre que cette solution permet d'installer ce brin-boucle facilement et sur tout type de siège.

D'autres caractéristiques avantageuses et non limitatives du brin-boucle conforme à l'invention sont les suivantes :
- ledit axe de fixation étant adapté à pivoter autour d'un axe géométrique de rotation, ladite douille présente un trou à engager sur ledit axe de fixation qui présente une face interne dissymétrique de révolution autour dudit axe géométrique de rotation ;
- il est prévu des moyens de débrayage adaptés à découpler la partie d'assujettissement dudit axe de fixation lorsqu'un effort est exercé sur la partie d'assujettissement ;
- les moyens de débrayage comportent une encoche en creux respectivement dans la rondelle ou dans la douille, et un ergot en saillie respectivement sur la douille ou la rondelle, qui est adapté à naviguer dans ladite encoche ;
- il est prévu des moyens de rappel adaptés à ramener ladite partie d'assujettissement dans une position de repos par rapport audit axe de fixation lorsqu'aucun effort n'est exercé sur la partie d'assujettissement ;
- ladite encoche étant délimitée entre deux bords qui délimitent la course de ladite partie d'assujettissement autour audit axe de fixation, en position de repos, les côtés de l'ergot sont situés à distances des bords de l'encoche.

L'invention porte également sur un siège de véhicule automobile comportant :
- un support (également appelée ci-après « structure porteuse »),
- une assise montée sur le support,
- un dossier monté sur le support avec une mobilité de basculement, et
- un dispositif d'accrochage tel que précité, monté sur un axe de fixation qui est adapté à pivoter à la faveur du basculement du dossier par rapport au support.

D'autres caractéristiques avantageuses et non limitatives du siège sont les suivantes :
- le dossier est monté sur le support au moyen de deux paires de bielles, chaque bielle étant connectée, d'un côté, au dossier, et de l'autre, au support, et ledit axe de fixation relie l'une desdites bielles au support ;
- lorsque le dossier bascule sur l'ensemble de sa course angulaire, l'axe de fixation présente une course angulaire inférieure à celle du dossier ;
- l'assise présentant un bord arrière et un bord avant qui, en position d'utilisation du siège, est situé à l'opposé du dossier, l'assise est montée sur le support avec une mobilité de basculement autour d'un axe situé plus proche du bord avant que du bord arrière de l'assise.

L'invention porte également sur un véhicule automobile comportant :
- un châssis,
- un système de direction des roues directrices, qui comprend un volant,
- un siège conducteur monté sur le châssis en face du volant, et
- un siège passager tel que précité, qui est monté sur le châssis à côté du siège conducteur, dont le dispositif d'accrochage est situé du côté opposé au siège conducteur.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective de deux sièges d'un véhicule automobile, représentés en position d'utilisation ;
- la figure 2 est une vue homologue de celle de la figure 1, sur laquelle un premier des deux sièges est en position repliée ;
- la figure 3 est une vue schématique en perspective éclatée des éléments nécessaire au montage d'un brin-boucle conforme à l'invention sur un axe du premier siège de la figure 2 ;
- la figure 4 est une vue assemblée du brin-boucle de la figure 3 ;
- la figure 5 est une vue schématique de côté d'une partie du premier siège de la figure 2, représenté en position d'utilisation ; et
- la figure 6 est une vue homologue de celle de la figure 5, sur laquelle le premier siège est représenté en position repliée.

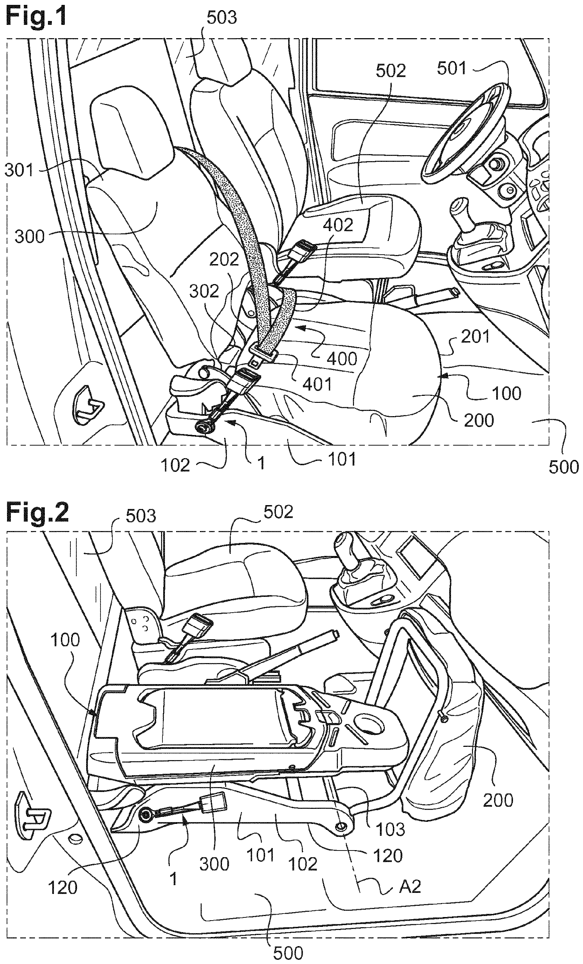

Sur la figure 1, on a représenté une partie d'un habitacle d'un véhicule automobile.

Dans la description, les termes « avant » et « arrière » seront utilisés par rapport à ce véhicule automobile, l'avant d'un élément désignant le côté de cet élément qui est tourné vers le capot du véhicule et l'arrière désignant le côté de cet élément qui est tourné vers le coffre.

De la même manière, les termes «inférieur » et «supérieur » seront utilisés par rapport à ce véhicule automobile, la partie inférieure d'un élément désignant la partie de cet élément qui est située du côté du plancher du véhicule et la partie supérieure désignant la partie de cet élément qui est située du côté du toit.

On considérera ici que ce véhicule automobile est un « véhicule utilitaire », c'est-à-dire un véhicule comportant uniquement une rangée de sièges. Il ne comporte en revanche pas de siège ou de banquette arrière, puisque l'ensemble de la zone arrière du véhicule constitue un coffre de chargement.

Ici, l'habitacle du véhicule automobile est séparé de ce coffre de chargement par une cloison de séparation 503 pleine ou grillagée.

Si l'invention s'appliquera plus particulièrement à un tel véhicule utilitaire, elle ne se limitera toutefois pas à ce type de véhicule, mais pourra également s'appliquer à tout autre type de véhicule automobile.

Comme le montre la figure 1, le véhicule automobile comporte classiquement un châssis (qui forme notamment le plancher 500 du véhicule), un groupe motopropulseur (non représenté) et un système de direction des roues directrices (qui comprend notamment un volant 501).

Ce véhicule automobile comporte ici exactement deux sièges, dont un siège conducteur 502 situé en face du volant 501, et un siège passager 100 situé à côté du siège conducteur 502. Tel qu'il est représenté sur les figures, le siège passager 100 est situé à droite du siège conducteur 502.

La présente invention porte alors plus précisément sur ce siège passager 100.

Ce siège passager 100 est ici escamotable, c'est-à-dire qu'il peut passer d'une position d'utilisation (représentée sur la figure 1) à une position repliée (également appelée « position Parere », représentée sur la figure 2) de manière à libérer de l'espace de chargement dans le véhicule.

Comme le montre schématiquement la figure 1, ce siège passager 100 comporte une assise 200 et un dossier 300 supportés par une structure porteuse 101.

La structure porteuse 101 pourrait se présenter sous diverses formes. Dans le mode de réalisation représenté, elle comporte deux flancs 102 parallèles, qui sont connectés ensemble par des tubes structurels 103 (figure 2) et qui sont montés sur le plancher 500 du véhicule de façon coulissante (par des rails non visibles sur les figures).

L'assise 200 et le dossier 300 sont montés sur la structure porteuse 101 via des charnières, de façon à pouvoir tous deux basculer.

En position d'utilisation, l'assise 200 s'étend sensiblement horizontalement (à 20 degrés près) et elle présente un bord avant 201 et un bord arrière 202.

Dans cette position d'utilisation, le dossier 300 est légèrement incliné vers l'arrière (avec un angle compris entre 5 et 45 degrés par rapport à la verticale) et il présente un bord supérieur 301 et un bord inférieur 302.

L'assise 200 est montée mobile en basculement sur la structure porteuse 101 autour d'un axe géométrique avant A2 (voir figure 2). Cet axe géométrique avant A2 est globalement situé à hauteur du bord avant 201 de l'assise 200, sous celle-ci. Il s'étend orthogonalement à l'axe géométrique longitudinal du véhicule automobile. Ainsi, l'assise 200 peut basculer depuis sa position d'utilisation (voir figure 1) jusqu'à une position relevée vers l'avant, sensiblement verticale, en appui contre le tableau de bord du véhicule (voir figure 2).

Le dossier 300 est quant à lui monté mobile en basculement sur la structure porteuse 100 de façon à pouvoir basculer depuis sa position d'utilisation (voir figure 1) jusqu'à une position rabattue vers l'avant, à la place de l'assise 200 (voir figure 2).

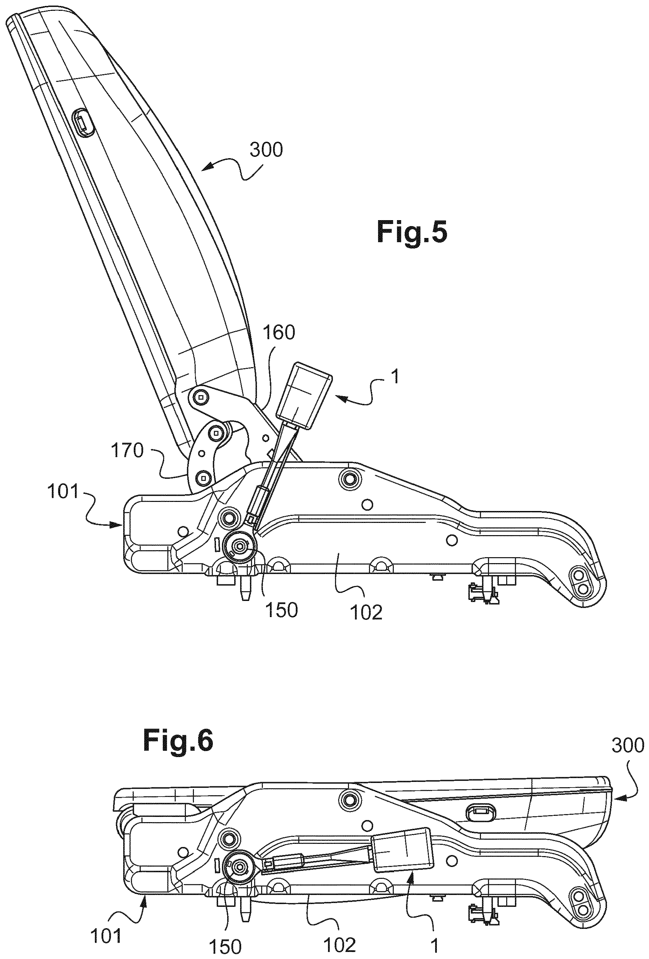

Comme le montre la figure 5, pour assurer cette mobilité, le dossier 300 est préférentiellement relié à la structure porteuse 101 par quatre bielles 160, 170.

Ces bielles sont réparties par paires de part et d'autre du dossier 300. Chaque paire de bielles comporte une bielle avant 160 et une bielle arrière 170, lesquelles sont chacune connectées, d'un côté, au dossier 300, et, de l'autre, à la structure porteuse 101, par des axes de fixation.

Ici, on peut plus particulièrement s'intéresser à l'un de ces axes de fixation 150.

Cet axe de fixation 150 est enfilé, d'une part, au travers d'une ouverture prévue dans l'extrémité basse de la bielle arrière 170, et, d'autre part, au travers d'une ouverture coaxiale prévue dans l'un des flancs 102 de la structure porteuse 101 (le flanc 102 situé à l'opposé du siège conducteur 502).

Cet axe de fixation 150 est plus précisément fixé à la bielle arrière 170, par exemple par une ligne de soudure, si bien que le pivotement de cette bielle arrière 170 provoque le pivotement de l'axe de fixation 150 autour de son axe géométrique (ci-après appelé « axe géométrique de rotation A1 »).

Bien entendu, l'axe de fixation 150 est libre de pivoter à l'intérieur de l'ouverture prévue dans le flanc 102 de la structure porteuse 101, de façon à laisser la bielle arrière 170 libre de pivoter par rapport à cette structure porteuse 101.

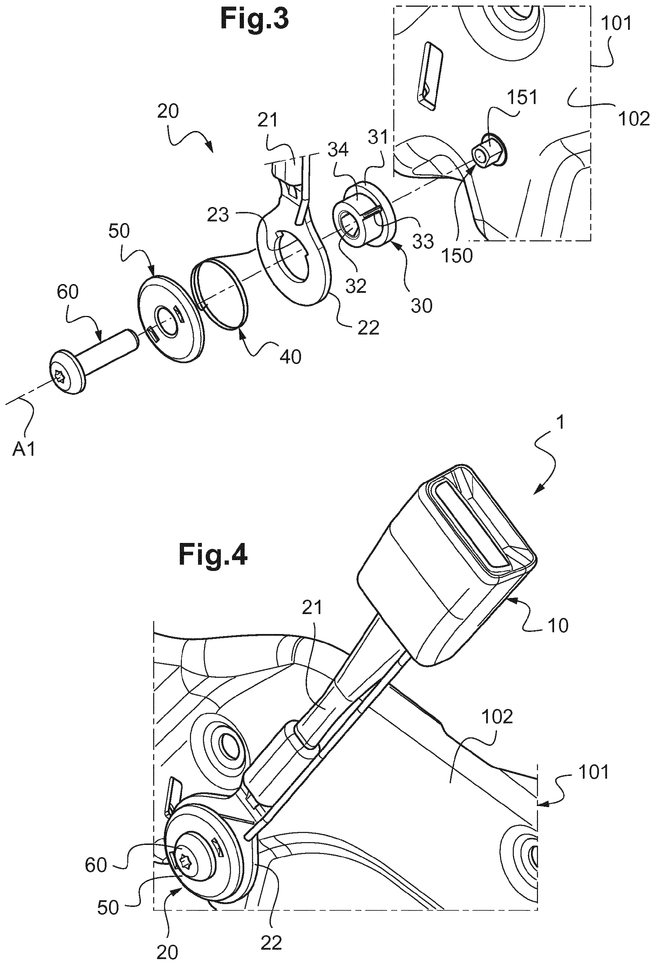

Comme le montre la figure 3, cet axe de fixation 150 comporte un embout 151 qui fait saillie du flanc, à l'opposé du siège conducteur 502.

De façon classique, comme le montre la figure 1, le siège passager 100 est équipé d'une ceinture de sécurité 400 qui comprend une sangle 402 et une boucle 401 enfilée sur cette sangle 402.

Le siège passager 100 est également équipé d'un dispositif d'accrochage, ci-après appelé brin-boucle 1, permettant d'accrocher facilement la boucle 401.

Ici, le brin-boucle 1 est situé, non pas de manière classique entre les deux sièges, mais au contraire à la droite du siège passager 100 (du côté opposé au siège conducteur 502).

Or, comme le montre la figure 1, la cloison de séparation 503 est partiellement ouverte, dans l'axe du siège passager 100, de façon que des objets de grandes longueurs puissent être chargés en partie dans le coffre de chargement du véhicule et en partie dans l'habitacle, en passant au travers de cette ouverture.

Lorsque le siège passager 100 est en position d'utilisation, il est nécessaire que le brin-boucle 1 soit en position relevée (figure 5) de façon à être accessible au passager.

Lorsque le siège passager 100 est en position repliée pour permettre le chargement d'objets de grandes longueurs, il existerait un risque que le brin-boucle 1 forme obstacle au chargement de ces objets s'il restait en position relevée.

C'est la raison pour laquelle le brin-boucle 1 est prévu pour s'escamoter automatiquement lorsque le dossier 300 est rabattu vers l'avant.

On peut alors décrire plus en détail l'architecture de ce brin-boucle 1.

Comme le montre la figure 4, le brin-boucle 1 comporte une partie d'assujettissement de la boucle 401, plus généralement connue sous le nom de « gâche 10 ». Cette gâche 10 présente une forme classique puisqu'elle définit une fente d'insertion de la boucle 401 et qu'elle loge un bouton-poussoir permettant de commander le déverrouillage et l'extraction de la boucle 401.

Le brin-boucle 1 comporte également une tige 21 allongée qui est fixée, d'un côté, à la gâche 10, et qui forme, de l'autre, une rondelle 22 délimitant un œillet.

Le brin-boucle 10 comporte également des moyens pour son montage sur l'axe de fixation 150. Ces moyens de montage 20 sont représentés en détail sur la figure 3.

Pour la raison expliquée ci-dessus, ces moyens de montage 20 comprennent notamment un moyen d'entraînement adapté à faire pivoter la tige 21 par rapport à la structure porteuse 101 à la faveur du basculement du dossier 300.

Selon une caractéristique particulièrement avantageuse de l'invention, ce moyen d'entraînement est couplé à l'axe de fixation 150 de façon à ce que la tige 21 pivote à la faveur du pivotement de cet axe de fixation 150.

L'avantage de monter le brin-boucle 1 sur cet axe de fixation 150 est que lorsque, la course du dossier entre sa position d'utilisation et sa position rabattue vers l'avant est de plus de 90 degrés, la course de l'axe de fixation 150 (et donc du brin-boucle entre sa position relevée et sa position escamotée) est très inférieure à 90 degrés (ici de l'ordre de 45 degrés). De cette manière, les positions relevée et escamotée du brin-boucle sont écartées d'un angle souhaité d'environ 45 degrés.

Dans le mode de réalisation représenté sur la figure 3, les moyens de montage 20 comportent plus précisément une douille 30 qui forme ledit moyen d'entraînement, un ressort 40, un capot de protection 50 et une vis de fixation 60.

La douille 30 comporte un corps 34 en forme de tube, qui est bordé extérieurement à l'une de ses extrémités par une nervure périphérique 31.

Cette douille 30 définit ainsi un trou traversant 32 de section identique à celle de l'embout 151 de l'axe de fixation 150. De cette façon, la douille 30 peut être engagée sur l'embout 151.

La douille 30 est prévue pour être montée fixement (c'est-à-dire sans degré de liberté) sur l'embout 151.

Pour cela, l'embout 151 présente ici une section non circulaire autour de l'axe géométrique de rotation A1. Sa face latérale est ainsi principalement cylindrique, mais elle comporte deux méplats. Grâce à ces méplats, la douille 30 est bloquée en rotation par rapport à l'embout 151 autour de l'axe géométrique de rotation A1.

Le corps 34 de la douille 30 présente par ailleurs une face externe sensiblement cylindrique de révolution, de diamètre égal, au jeu de fonctionnement près, au diamètre de l'œillet délimité par la rondelle 22. De cette manière, la rondelle 22 peut être engagée sur la douille 30, en appui contre la nervure périphérique 31.

On pourrait prévoir un montage sans jeu de la rondelle 22 sur la douille 30 afin de contraindre le pivotement du brin-boucle 1 lorsque le dossier 30 est rabattu vers l'avant.

Le risque serait alors de casser le brin-boucle 1 lorsqu'un obstacle empêcherait ce dernier de pivoter.

Pour éviter cela, il est prévu des moyens de débrayage adaptés à découpler la rondelle 22 de la douille 30 lorsqu'un effort est exercé sur le brin-boucle 1.

Plus précisément, la rondelle 22 est donc montée avec du jeu sur la douille 30, et elle comporte une encoche 23 en creux dans son bord intérieur. La douille 30 comporte en correspondance, en saillie du corps 34, un ergot 33 de largeur inférieure à celle de l'encoche 23, qui est adapté à naviguer dans l'encoche 23.

Plus précisément, l'encoche 23 s'étend sur un secteur angulaire d'au moins 90 degrés de plus que le secteur angulaire sur lequel s'étend l'ergot 33. De cette façon, l'axe de fixation 150 est libre de pivoter sur un secteur angulaire de 90 degrés lorsque le brin-boucle 1 est bloqué. En d'autres termes, le dossier 300 reste libre de basculer en position d'utilisation ou en position rabattue vers l'avant lorsque le brin-boucle 1 est bloqué.

Il est alors prévu des moyens de rappel adaptés à ramener la rondelle 20 dans une position dite de repos par rapport à la douille 30, lorsqu'aucun effort extérieur n'est exercé sur le brin-boucle 1. Ces moyens de rappel sont formés par le ressort 40 précité, qui est ici un ressort de torsion. Ce ressort 40 présente alors une extrémité fixée à la rondelle 22 et une autre extrémité fixée à la douille 30.

Ce ressort 40 est agencé de telle manière qu'en position de repos, les côtés de l'ergot 33 se trouvent situés à égales distances des bords de l'encoche 23.

Ainsi, lorsque le brin-boucle 1 est bloqué en position relevée (figure 5) et que l'usager rabat le dossier 30 vers l'avant, la douille 30 peut librement pivoter dans la rondelle 22, ce qui évite toute casse.

De la même manière, lorsque le brin-boucle 1 est bloqué en position escamotée (figure 6) et que l'usager ramène le dossier 30 vers l'arrière, la douille 30 peut aussi librement pivoter dans la rondelle 22, ce qui évite toute casse.

Comme le montre la figure 3, le capot de protection 50 présente ici une forme annulaire. Il est notamment prévu pour cacher et protéger le ressort 40.

La vis de fixation 60 est quant à elle prévue pour traverser successivement le capot de protection 50, le ressort 40 et l'œillet de la rondelle 20 afin de se visser solidement dans un alésage taraudé prévu en conséquence dans l'embout 151 de l'axe de fixation 150. Cette vis de fixation 60 permet ainsi de retenir la douille 30 sur l'embout 151 de l'axe de fixation 150 et la rondelle 20 sur la douille 30.

La présente invention n'est nullement limitée au mode de réalisation décrit et représenté, mais l'homme du métier saura y apporter toute variante conforme à l'invention.

Ainsi, il serait possible de monter le brin-boucle sur un autre des axes du siège. Cet axe sera préférentiellement l'un des axes permettant d'articuler le dossier sur la structure porteuse.

En variante, il pourra s'agir d'un autre axe, pour autant que cet axe pivote automatiquement lors de la bascule du dossier.

Selon une autre variante, on aurait pu prévoir que l'assise du dossier ne soit pas conçue pour basculer et que le dossier soit conçu pour basculer sur l'assise.

## Revendications

1. Dispositif d'accrochage (1) de boucle (401) de ceinture de sécurité (400), à monter sur un siège (100) comportant un support (101), une assise (200) et un dossier (300) adapté à basculer par rapport audit support (101), ledit dispositif d'accrochage (1) comportant :
- une partie d'assujettissement (10) de ladite boucle (401), et
- des moyens de montage (20) de la partie d'assujettissement (10) sur un axe de fixation (150) dudit siège (100), qui comprennent :
- une tige fixée d'un côté à ladite partie d'assujettissement (10) et de l'autre à une rondelle (22), et
- un moyen d'entraînement adapté à faire pivoter la partie d'assujettissement (10) par rapport audit support (101) à la faveur du basculement du dossier (300),
ledit axe de fixation (150) étant adapté à pivoter par rapport audit support (101) à la faveur du basculement du dossier (300) par rapport audit support (101), le moyen d'entraînement comportant une douille (30), **caractérisé en ce que** ladite rondelle (22) est engagée sur ladite douille (30) qui est elle-même adaptée à être engagée sur ledit axe de fixation (150) et à être couplée audit axe de fixation (150) de façon à faire pivoter la partie d'assujettissement (10) à la faveur du pivotement dudit axe de fixation (150).

2. Dispositif d'accrochage (1) selon la revendication précédente, dans lequel, ledit axe de fixation (150) étant adapté à pivoter autour d'un axe géométrique de rotation (A1), ladite douille (30) présente un trou (32) à engager sur ledit axe de fixation (150) qui présente une face interne dissymétrique de révolution autour dudit axe géométrique de rotation (A1).

3. Dispositif d'accrochage (1) selon l'une des revendications précédentes, dans lequel il est prévu des moyens de débrayage adaptés à découpler la partie d'assujettissement (10) dudit axe de fixation (150) lorsqu'un effort est exercé sur la partie d'assujettissement (10).

4. Dispositif d'accrochage (1) selon la revendication précédente, dans lequel les moyens de débrayage comportent une encoche (23) en creux respectivement dans la rondelle (22) ou dans la douille, et un ergot (33) en saillie respectivement sur la douille (30) ou la rondelle, qui est adapté à naviguer dans ladite encoche (23).

5. Dispositif d'accrochage (1) selon l'une des deux revendications précédentes, dans lequel il est prévu des moyens de rappel (40) adaptés à ramener ladite partie d'assujettissement (10) dans une position de repos par rapport audit axe de fixation (150) lorsqu'aucun effort n'est exercé sur la partie d'assujettissement (10).

6. Dispositif d'accrochage (1) selon la revendication précédente, dans lequel ladite encoche (23) étant délimitée entre deux bords qui délimitent la course de ladite partie d'assujettissement (10) autour audit axe de fixation (150), en position de repos, les côtés de l'ergot (33) sont situés à distances des bords de l'encoche (23).

7. Siège (100) de véhicule automobile comportant :
- un support (101),
- une assise (200) montée sur le support (101), et
- un dossier (300) monté sur le support (101) avec une mobilité de basculement,
**caractérisé en ce qu'**il comporte un dispositif d'accrochage (1) conforme à l'une des revendications précédentes, monté sur un axe de fixation (150) qui est adapté à pivoter à la faveur du basculement du dossier (300) par rapport au support (101).

8. Siège (100) selon la revendication précédente, dans lequel le dossier (300) est monté sur le support (101) au moyen de deux paires de bielles (160, 170), chaque bielle (160, 170) étant connectée, d'un côté, au dossier (300), et de l'autre, au support (101), et dans lequel ledit axe de fixation (150) relie l'une desdites bielles (160, 170) au support (101).

9. Siège (100) selon l'une des deux revendications précédentes, dans lequel l'axe de fixation (150) présente une course angulaire inférieure à celle du dossier (300).

10. Siège (100) selon l'une des trois revendications précédentes, dans lequel l'assise (200) présentant un bord arrière (202) et un bord avant (201) qui, en position d'utilisation du siège (100), est situé à l'opposé du dossier (300), l'assise (200) est montée sur le support (101) avec une mobilité de basculement autour d'un axe (A2) situé plus proche du bord avant (201) que du bord arrière (202) de l'assise (200).

11. Véhicule automobile comportant :
- un châssis (500),
- un système de direction des roues directrices, qui comprend un volant (501),
- un siège conducteur (502) monté sur le châssis (500) en face du volant (501), et
- un siège (100) passager monté sur le châssis (500) à côté du siège conducteur (502),
**caractérisé en ce que** le siège (100) passager est conforme à l'une des quatre revendications précédentes et **en ce que** le dispositif d'accrochage (1) du siège (100) passager est situé du côté opposé au siège conducteur (502).

## Patentansprüche

1. Vorrichtung zur Befestigung (1) einer Schnalle (401) eines Sicherheitsgurts (400) zur Anbringung an einem Sitz (100) aufweisend einen Träger (101), eine Sitzfläche (200) und eine Rücklehne (300), die geeignet ist, bezogen auf den Träger (101) zu kippen, die Vorrichtung zur Befestigung (1) aufweisend:
- einen Abschnitt zur Fixierung (10) der Schnalle (401), und
- Mittel zur Montage (20) des Abschnitts zur Fixierung (10) auf eine Befestigungsachse (150) des Sitzes (100), die Folgendes umfassen:
- eine Stange, die auf einer Seite an dem Abschnitt zur Fixierung (10) und auf der anderen an einer Scheibe (22) befestigt ist, und
- ein Antriebsmittel, das geeignet ist, den Abschnitt zur Fixierung (10) bezogen auf den Träger (101) durch das Kippen der Rücklehne (300) zu schwenken, wobei die Befestigungsachse (150) geeignet ist, bezogen auf den Träger (101) durch das Kippen der Rücklehne (300) bezogen auf den Träger (101) zu schwenken, wobei das Antriebsmittel eine Buchse (30) aufweist,
**dadurch gekennzeichnet, dass** die Scheibe (22) mit der Buchse (30) in Eingriff steht, die ihrerseits geeignet ist, mit der Befestigungsachse (150) in Eingriff zu stehen und mit der Befestigungsachse (150) so gekoppelt zu sein, dass der Abschnitt zur Fixierung (10) durch das Schwenken der Befestigungsachse (150) geschwenkt wird.

2. Vorrichtung zur Befestigung (1) nach dem vorhergehenden Anspruch, wobei die Befestigungsachse (150) geeignet ist, um eine geometrische Drehachse (A1) zu schwenken, wobei die Buchse (30) ein Loch (32) zum Eingriff mit der Befestigungsachse (150) aufweist, die eine unsymmetrische Innenfläche zur Drehung um die geometrische Drehachse (A1) aufweist.

3. Vorrichtung zur Befestigung (1) nach einem der vorhergehenden Ansprüche, wobei Entkopplungsmittel vorgesehen sind, die geeignet sind, den Abschnitt zur Fixierung (10) von der Befestigungsachse (150) zu entkoppeln, wenn eine Kraft auf den Abschnitt zur Fixierung (10) ausgeübt wird.

4. Vorrichtung zur Befestigung (1) nach dem vorhergehenden Anspruch, wobei die Entkopplungsmittel jeweils in der Scheibe (22) oder in der Buchse eine vertiefte Auskerbung (23) und jeweils auf der Buchse (30) oder der Scheibe eine hervorstehende Nase (33), die geeignet ist, in die Auskerbung (23) hineinzusteuern, aufweisen.

5. Vorrichtung zur Befestigung (1) nach einem der zwei vorhergehenden Ansprüche, wobei Rückholmittel (40) vorgesehen sind, die geeignet sind, den Abschnitt zur Fixierung (10) in eine Ruheposition bezogen auf die Befestigungsachse (150) zurückzuholen, wenn keine Kraft auf den Abschnitt zur Fixierung (10) ausgeübt wird.

6. Vorrichtung zur Befestigung (1) nach dem vorhergehenden Anspruch, wobei die Auskerbung (23) zwischen zwei Rändern begrenzt ist, die den Weg des Abschnitts zur Fixierung (10) um die Befestigungsachse (150) begrenzen, wobei in der Ruheposition die Seiten der Nase (33) von den Rändern der Auskerbung (23) beabstandet sind.

7. Kraftfahrzeugsitz (100), aufweisend:
- einen Träger (101),
- eine Sitzfläche (200), die auf dem Träger (101) montiert ist, und
- eine Rücklehne (300), die mit einer Kippbeweglichkeit auf dem Träger (101) montiert ist, **dadurch gekennzeichnet, dass** er eine Vorrichtung zur Befestigung (1) nach einem der vorhergehenden Ansprüche aufweist, die auf einer Befestigungsachse (150) montiert ist, die geeignet ist, durch das Kippen der Rücklehne (300) bezogen auf den Träger (101) zu schwenken.

8. Sitz (100) nach dem vorhergehenden Anspruch, wobei die Rücklehne (300) mittels zweier Paare von Verbindungsgliedern (160, 170) auf dem Träger (101) montiert ist, wobei jedes Verbindungsglied (160, 170) auf einer Seite mit der Rücklehne (300) und auf der anderen mit dem Träger (101) verbunden ist, und wobei die Befestigungsachse (150) eins der Verbindungsglieder (160, 170) mit dem Träger (101) verbindet.

9. Sitz (100) nach einem der zwei vorhergehenden Ansprüche, wobei die Befestigungsachse (150) einen Winkelweg aufweist, der kleiner als jener der Rücklehne (300) ist.

10. Sitz (100) nach einem der drei vorhergehenden Ansprüche, wobei, die Sitzfläche (200) aufweisend einen hinteren Rand (202) und einen vorderen Rand (201), der sich in der Gebrauchsposition des Sitzes (100) gegenüber der Rücklehne (300) befindet, die Sitzfläche (200) mit einer Kippbeweglichkeit um eine Achse (A2), die sich näher am vorderen Rand (201) als am hinteren Rand (202) der Sitzfläche (200) befindet, auf dem Träger (101) montiert ist.

11. Kraftfahrzeug, aufweisend:
- ein Chassis (500),
- ein System zum Lenken der lenkbaren Räder, das ein Steuer (501) umfasst,
- einen Fahrersitz (502), der auf dem Chassis (500) gegenüber dem Steuer (501) montiert ist, und
- einen Beifahrersitz (100), der auf dem Chassis (500) neben dem Fahrersitz (502) montiert ist,
**dadurch gekennzeichnet, dass** der Beifahrersitz (100) einem der vier vorhergehenden Ansprüche entspricht, und dadurch, dass sich die Vorrichtung zur Befestigung (1) des Beifahrersitzes (100) auf der Seite gegenüber dem Fahrersitz (502) befindet.

## Claims

1. Securing device (1) for a tongue (401) of a safety belt (400), to be mounted on a seat (100) comprising a support (101), a seating part (200) and a seat back (300) that is designed to tilt with respect to said support (101), said securing device (1) comprising:
- a part (10) for capturing said tongue (401), and
- means (20) for mounting said capturing part (10) on an attachment pin (150) of said seat (100), which comprise:
- a stem attached on the one hand to said capturing part (10) and on the other to a washer (22), and
- a drive means suitable to cause the capturing part (10) to pivot with respect to said support (101) by virtue of the tilting of the seat back (300),
said attachment pin (150) being able to pivot with respect to said support (101) by virtue of the tilting of the seat back (300) with respect to said support (101), the drive means comprising a bushing (30),
**characterized in that** said washer (22) is fitted onto said bushing (30) which is itself able to be fitted onto said attachment pin (150) and to be coupled to said attachment pin (150) so as to make the capturing part (10) pivot by virtue of the pivoting of said attachment pin (150).

2. Securing device (1) according to the preceding claim, in which, said attachment pin (150) being able to pivot about a axis of rotation (A1), said bushing (30) has a hole (32) that is to be fitted onto said attachment pin (150) which has an internal face which is not rotationally symmetric about said axis of rotation (A1).

3. Securing device (1) according to either of the preceding claims, in which there are provided disengagement means that are able to decouple the capturing part (10) from said attachment pin (150) when a force is applied to the capturing part (10).

4. Securing device (1) according to the preceding claim, in which the disengagement means comprise a hollow notch (23) respectively in the washer (22) or in the bushing, and a lug (33) which projects respectively from the bushing (30) or from the washer and which is designed to move within said notch (23).

5. Securing device (1) according to either of the two preceding claims, in which there are provided return means (40) that are able to return said capturing part (10) to a rest position with respect to said attachment pin (150) when no force is applied to the capturing part (10).

6. Securing device (1) according to the preceding claim, in which, said notch (23) being delimited between two edges which delimit the travel of said capturing part (10) about said attachment pin (150), in the rest position, the sides of the lug (33) are located at distances from the edges of the notch (23).

7. Seat (100) for a motor vehicle, comprising:
- a support (101),
- a seating part (200) mounted on the support (101), and
- a seat back (300) mounted on the support (101) with the ability to tilt,
**characterized in that** it comprises a securing device (1) in accordance with one of the preceding claims, mounted on an attachment pin (150) which is able to pivot by virtue of the tilting of the seat back (300) with respect to the support (101).

8. Seat (100) according to the preceding claim, in which the seat back (300) is mounted on the support (101) by means of two pairs of connecting arms (160, 170), each connecting arm (160, 170) being connected on the one hand to the seat back (300) and on the other to the support (101), and in which said attachment pin (150) connects one of said connecting arms (160, 170) to the support (101).

9. Seat (100) according to either of the two preceding claims, in which the attachment pin (150) has an angular travel which is smaller than that of the seat back (300).

10. Seat (100) according to one of the three preceding claims, in which, the seating part (200) having a rear edge (202) and a front edge (201) which is located at the opposite end from the seat back (300) when the seat (100) is in its position of use, the seating part (200) is mounted on the support (101) with the ability to tilt about an axis (A2) located closer to the front edge (201) than to the rear edge (202) of the seating part (200).

11. Motor vehicle comprising:
- a chassis (500),
- a system for steering the steered wheels, which system comprises a steering wheel (501),
- a driver seat (502) mounted on the chassis (500) facing the steering wheel (501), and
- a passenger seat (100) mounted on the chassis (500) next to the driver seat (502),
**characterized in that** the passenger seat (100) is in accordance with one of the four preceding claims, and **in that** the securing device (1) of the passenger seat (100) is located on the opposite side from the driver seat (502).
